# EUROPEAN PATENT APPLICATION

(11) **EP 3 972 083 A1**
(43) Date of publication of application: **23.03.2022**
(21) Application number: 20822497.2
(22) Date of filing: 16.03.2020
(51) Int. Cl.: H02J 13/00, B60R 16/02, B60R 16/03, H02J 7/00, G06F 1/3287

(54) **POWER SUPPLY CONTROL DEVICE FOR MOBILE BODY**

(30) Priority: 14.06.2019 JP 2019110938
(71) Applicant: MAZDA MOTOR CORPORATION, Hiroshima 730-8670 (JP)
(72) Inventor: SUENAGA, Shuji, Hiroshima 730-8670 (JP)
(74) Representative: von Tietzen und Hennig, Nikolaus
(86) International application number: PCT/JP2020/011365
(87) International publication number: WO 2020/250523

(57) **Abstract**

The present disclosure includes a plurality of sensors (10 to 18) that acquire information including an external environment of a vehicle, and an arithmetic unit (100) that controls an onboard device of the vehicle in response to the information input from the plurality of sensors (10 to 18). The arithmetic unit (100) includes: a vehicle status identifier (31) that identifies a status of the vehicle; a plurality of functional sections (21 to 25) that are actuated in accordance with the status of the vehicle and generate a control signal to be transmitted to the onboard device; and a power source controller (32) that controls supply and cutoff of power to the functional sections (21 to 25) so that the power is supplied to a predetermined combination of the functional sections (21 to 25) in accordance with the status of the vehicle.

## Description

### TECHNICAL FIELD

The technique disclosed herein belongs to a technical field relating to a power source control device for a mobile body.

### BACKGROUND ART

In a mobile body having a plurality of devices, there has been known a technique for controlling actuation of an electronic control unit (ECU) that controls each of the plurality of devices.

For example, Patent Document 1 discloses a vehicle control system that controls onboard devices mounted in a vehicle as a mobile body, in which a control apparatus is divided into a plurality of functional blocks in advance; each of the plurality of functional blocks stores management information including information on a state of the vehicle in which the functional block is to be operated, area information indicating an arranged area, and domain information indicating a classified domain; and an integrated controller determines an area and a domain including the functional blocks to be operated in an identified state of the vehicle using the management information stored in the functional blocks, and prepares an environment in which the functional blocks can be operated for the determined area and domain.

### CITATION LIST

### PATENT DOCUMENT

Patent Document 1: Japanese Unexamined Patent Publication No. 2018-70312

### SUMMARY OF THE INVENTION

### TECHNICAL PROBLEM

In recent years, devices mounted in a mobile body, such as a vehicle, are controlled mainly by electronic control, and a microcomputer is provided for each device. For this reason, the number of microcomputers per mobile body is increasing, and some automobiles have several hundreds of microcomputers. As the number of microcomputers increases, a configuration of an electrical system becomes complicated.

It is therefore conceivable to incorporate a microcomputer function controlling the devices into one arithmetic unit. In such a configuration, if all the functions of the arithmetic unit are constantly actuated, power consumption may increase.

It is therefore an object of the technique disclosed herein to simplify a configuration of an electrical system of a mobile body and to reduce an increase in power consumption.

### SOLUTION TO THE PROBLEMS

In order to solve the above problems, the technique disclosed herein is directed to a power source control device for a mobile body. The power source control device includes: a plurality of sensors that acquire information including an external environment of the mobile body; and an arithmetic unit that controls an onboard device of the mobile body in response to the information input from the plurality of sensors, wherein the arithmetic unit includes: a mobile body status identifier that identifies a status of the mobile body based on the information input from each of the sensors; a plurality of functional sections that are actuated in accordance with the status of the mobile body and generate a control signal to be transmitted to the onboard device; and a power source controller that controls supply and cutoff of power to the functional sections so that the power is supplied to a predetermined combination of the functional sections in accordance with the status of the mobile body identified by the mobile body status identifier.

According to this configuration, the arithmetic unit includes the plurality of functional sections to set a control amount of the onboard device of the mobile body, and thus the number of microcomputers controlling the onboard device can be reduced. This can simplify a configuration of the electrical system of the mobile body.

Further, the power source controller can control the supply and cutoff of the power to the functional sections in accordance with the status of the mobile body. That is, the power source controller can supply power only to the functional sections related to the functions to be exhibited by the mobile body, while cutting off the power supply to the other functional sections. Consequently, an average value of power consumption in total operating time of the mobile body can be lowered, and an increase in the power consumption can be reduced.

In the power source control device for the mobile body, the arithmetic unit may further include power transmitters disposed in power transmission paths between a power source and the respective functional sections, and when a control signal is input from the power source controller to the power transmitters, power may be supplied to the functional sections corresponding to the power transmitters which have received the control signal.

According to this configuration, it is enough for the power source controller to output the control signal to the power transmitters in accordance with the status of the mobile body identified by the mobile body status identifier. This can reduce a processing load on the power source controller.

In the power source control device for the mobile body, the arithmetic unit may further include a storage that stores a power supply table specifying, for each status of the mobile body, combinations of the functional sections to which the power is to be supplied, and the power source controller may control the supply and cutoff of the power to the functional sections based on the power supply table.

According to this configuration, it is enough for the power source controller to check the power supply table for the status of the mobile body identified by the mobile body status identifier to control the supply and cutoff of the power to the functional sections. This can further reduce a processing load on the power source controller.

In the power source control device for the mobile body, the plurality of functional sections may be capable of executing a function of autonomous traveling which sets a traveling route to be traveled by the mobile body and sets a motion of the mobile body for following the traveling route.

That is, in the function of the autonomous traveling, it is necessary to calculate the traveling route of the mobile body and set the motion of the mobile body for following the traveling route, and the functional sections are required to have a high processing capacity. Thus, the power consumption of the functional sections for achieving the function of the autonomous traveling tends to be large. Thus, when it is not necessary to exert the autonomous traveling function, such as while the mobile body is stopped, power supply to some or all of the functional sections for achieving the autonomous traveling function is cut off to reduce an increase in the power consumption.

In the power source control device for the mobile body in which the plurality of functional sections are capable of executing the function of autonomous traveling, the mobile body may be an automobile, and the power source controller may cut off the supply of the power to the plurality of functional sections for achieving the function of the autonomous traveling when the status of the mobile body identified by the mobile body status identifier is that the automobile is stopped and there is no occupant in a cabin of the automobile.

The automobile has a large number of devices on board. Thus, the integration of the functional sections into a single arithmetic unit can simplify the electrical system more appropriately. Further, the capacity of the battery mounted on the automobile is limited. Thus, the provision of the power source controller can reduce an increase in the power consumption more appropriately.

In the power source control device for the mobile body in which the plurality of functional sections are capable of executing the function of autonomous traveling, in addition to the autonomous traveling, the mobile body may be capable of manual traveling in which a vehicle is driven by an operation by an occupant, among the plurality of functional sections, the functional section for executing the function of the autonomous traveling may include an image processor that performs image processing on an output of a camera that captures an image of an external environment of the vehicle, and the power source controller may cut off the supply of the power to the image processor when the status of the mobile body identified by the mobile body status identifier is that the mobile body is in a status of the manual traveling.

In the power source control device for the mobile body, the mobile body may be an automobile, and the plurality of functional sections may be capable of executing an anti-theft function of the mobile body, and the power source controller may cut off the supply of the power to the plurality of functional sections for achieving the anti-theft function when the status of the mobile body identified by the mobile body status identifier is that the automobile is traveling or that there is an occupant in a cabin of the automobile.

### ADVANTAGES OF THE INVENTION

As described above, the technique disclosed herein can simplify the configuration of the electrical system of the mobile body and reduce an increase in the power consumption.

### BRIEF DESCRIPTION OF THE DRAWINGS

FIG. 1 is a schematic diagram showing a vehicle on which a power source control device according to an example first embodiment is mounted.
FIG. 2 is a configuration diagram of an electrical system of the vehicle.
FIG. 3 is a diagram showing an example power supply table.
FIG. 4 is a flowchart showing processing operations of power source control by an integrated controller.
FIG. 5 is a schematic diagram showing an electrical system of a vehicle on which a power source control device according to an example second embodiment is mounted.

### DESCRIPTION OF EMBODIMENTS

Example embodiments will now be described in detail with reference to the drawings.

### (First Embodiment)

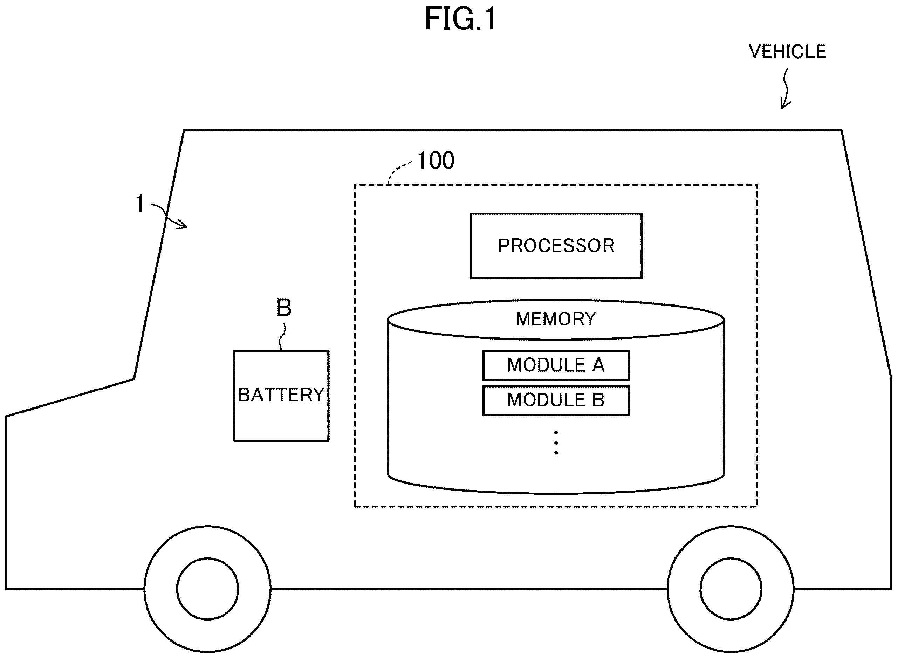

FIG. 1 schematically shows a mobile body on which a power source control device 1 according to a first embodiment is mounted. In the first embodiment, the mobile body is a vehicle of an automobile. In the following description, the mobile body may simply be referred to as a vehicle.

The power source control device 1 includes one arithmetic unit 100. The arithmetic unit 100 is configured as being in a single casing and is mounted on the vehicle. The arithmetic unit 100 has a processor having a CPU, a memory storing a plurality of modules, and the like. The arithmetic unit 100 has a function of selecting to which module in the memory the power stored in a battery B, which is a power source mounted in the vehicle, is supplied. Such a function is stored as software in a module of the memory. The number of processors and the number of memories are not limited to one, and the arithmetic unit 100 may have two or more processors and memories.

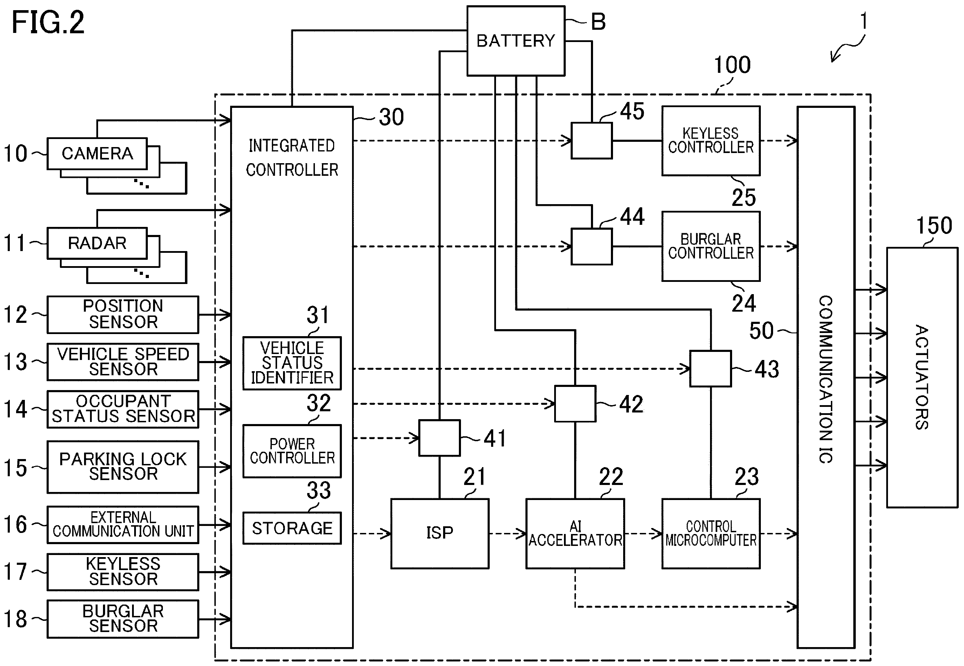

As shown in FIG. 2, the power source control device 1 includes a plurality of sensors 10 to 18 that acquire information including an external environment of the vehicle, and one arithmetic unit 100. The sensors include, for example, a plurality of cameras 10 that is provided on a body or the like of the vehicle and captures images of the external environment, a plurality of radars 11 provided on the body or the like of the vehicle and detecting a target or the like outside the vehicle, a position sensor 12 that detects a position of the vehicle (vehicle position information) using a global positioning system (GPS), a vehicle speed sensor 13 that detects a traveling speed of the vehicle, an occupant status sensor 14 that acquires a status of an occupant including the presence or absence of the occupant of the vehicle, a parking lock sensor 15 that detects a locked state of a parking lock of the vehicle, an external communication unit 16 that receives communication information from another vehicle located around the subject vehicle and update information of a program stored in the arithmetic unit 100 and which inputs such information to the arithmetic unit 100, a keyless sensor 17 that receives a signal from a portable device of a keyless entry system, and a burglar sensor 18 for an anti-theft purpose. The sensors 10 to 18 described herein are examples of sensors that input the information to the arithmetic unit 100, and inputting the information to the calculator 100 from sensors other than the sensors 10 to 18 is not excluded.

The cameras 10 are arranged to image the surroundings of the vehicle at 360° in the horizontal direction. Each camera 10 captures optical images showing the environment outside the vehicle to generate image data. Each of the cameras 10 outputs the image data generated to the arithmetic unit 100.

Like the cameras 10, the radars 11 are arranged so that the detection range covers 360° of the vehicle in the horizontal direction. The type of the radars 11 is not particularly limited. For example, a millimeter wave radar or an infrared radar may be adopted.

The occupant status sensor 14 is comprised of, for example, an in-car camera that captures an image inside the cabin and a load sensor provided in a seat cushion. Each occupant status sensor 14 outputs the generated image data and a detection result to the arithmetic unit 100. The in-car camera comprising the occupant status sensor 14 may be comprised of a camera with lower performance, e.g., lower resolution, than the cameras 10 capturing the outside of the vehicle.

The arithmetic unit 100 controls an onboard device of the vehicle in response to the information input from the plurality of sensors 10 to 18. The arithmetic unit 100 includes an image signal processor (ISP) 21, an AI accelerator 22, and a control microcomputer 23. What is actually controlled by the arithmetic unit 100 is an actuator 150 of the onboard device. The actuator 150 includes not only the actuators of traveling devices such as an engine, a brake, and a steering, but also the actuators of so-called body-related devices such as headlights and an air conditioner.

The ISP 21 performs image processing on the outputs of the cameras 10. For example, the ISP 21 deletes pixels unnecessary for the processing (e.g., object recognition) by the AI accelerator 22 among the elements included in the image, and thins out the data related to color (e.g., all of the vehicles are represented by the same color), for the image data captured by the cameras 10. An image signal processed by the ISP 21 is input to the AI accelerator 22. In the present embodiment, the image data of the in-car camera comprising the occupant status sensor 14 is input to the AI accelerator 22 without going through the ISP 21. The ISP 21 serves as an image processor.

The AI accelerator 22 recognizes an object around the vehicle by using a learned model generated by deep learning based on an image outside the vehicle which is input from the ISP 21. The AI accelerator 22 integrates information, such as a relative distance to an object acquired by the radars 11, with the image outside the vehicle and a result of the recognition of the object, and creates a 3D map showing the vehicle's external environment. The AI accelerator 22 estimates the status of an occupant in the cabin of the vehicle based on the image data from the in-car camera and information obtained by other sensors comprising the occupant status sensor 14. The AI accelerator 22 estimates the status of the occupant in the cabin of the vehicle using a learned model generated by deep learning. The status of the occupant refers to health conditions and emotions of the occupant. The health conditions of the occupant include, for example, good health condition, slightly fatigue, poor health condition, decreased consciousness, and the like. The emotions of the occupant include, for example, fun, normal, bored, annoyed, uncomfortable, and the like.

When the vehicle is autonomously driven, the control microcomputer 23 creates a 2D map for calculating a traveling route of the vehicle based on the 3D map created by the AI accelerator 22. The control microcomputer 23 generates the traveling route of the vehicle based on the created 2D map. The control microcomputer 23 determines a target motion of the vehicle for following the generated traveling route, and calculates a driving force, a braking force, and a steering amount for achieving the determined target motion. The autonomous driving described herein includes not only fully autonomous driving in which a driver does not perform steering operation or the like, but also assisted driving in which the steering operation or the like of the driver is assisted.

On the basis of the above, the ISP 21, the AI accelerator 22, and the control microcomputer 23 are capable of executing a function of autonomous traveling (here, autonomous driving function) which sets a traveling route to be traveled by the vehicle and sets a motion of the vehicle for following the traveling route.

Meanwhile, the control microcomputer 23 calculates the driving force, the braking force, and the steering amount in accordance with the operations of an accelerator pedal, a brake pedal, and a steering wheel by the occupant while the occupant manually drives the vehicle by operating, e.g., the accelerator pedal.

Further, the control microcomputer 23 controls, for example, air conditioning (air volume and temperature) based on the status of the occupant estimated by the AI accelerator 22.

Further, the control microcomputer 23 reprograms the corresponding program when, for example, the update information of the program stored in the control microcomputer 23 is acquired via the external communication unit 16.

The arithmetic unit 100 further includes a burglar controller 24 that controls an anti-theft function. When the burglar sensor 18 detects an unauthorized intrusion into the cabin of the vehicle, the burglar controller 24 outputs an actuation signal to a burglar alarm so as to actuate the burglar alarm.

The arithmetic unit 100 further includes a keyless controller 25 that controls a keyless entry function. The keyless controller 25 receives information associated with an operation of the portable device from the keyless sensor 17 via an integrated controller 30 described later. The keyless controller 25 basically outputs an actuation signal to the actuator 150 so as to lock a door. Meanwhile, upon receipt of the signal for unlocking the door via the keyless sensor 17, the keyless controller 25 outputs an actuation signal to the actuator 150 so as to unlock the door.

The ISP 21, the AI accelerator 22, the control microcomputer 23, the burglar controller 24, and the keyless controller 25 correspond to a plurality of functional sections that generate control signals to the onboard devices of the vehicle. A functional section other than these functional sections may be mounted in the arithmetic unit 100.

The signals of the functional sections 21 to 25 are input to a communication IC 50 provided in the arithmetic unit 100, and are transmitted to each actuator 150 via the communication IC 50.

The arithmetic unit 100 further includes the integrated controller 30 capable of communicating with the functional sections 21 to 25. The integrated controller 30 has a vehicle status identifier 31 that identifies the status of the vehicle based on the information input from the sensors 10 to 18, a power source controller 32 that controls supply and cutoff of power to the functional sections 21 to 25 so that the power is supplied to a predetermined combination of the functional sections 21 to 25 in accordance with the identified status of the vehicle, and a storage 33 that stores a power supply table 321 described later.

The vehicle status identifier 31 identifies the status of the vehicle, particularly a scene of the vehicle including the presence or absence of occupants. For example, the vehicle status identifier 31 identifies whether the vehicle is located in an urban area or a suburb on the basis of information from the position sensor 12, and identifies whether the vehicle is traveling or stopped on the basis of information from the position sensor 12 and the vehicle speed sensor 13. Further, the vehicle status identifier 31 identifies whether the vehicle is parked, for example, on the basis of information from the parking lock sensor 15. Further, the vehicle status identifier 31 identifies the presence or absence of occupants in the cabin of the vehicle on the basis of, for example, information from the occupant status sensor 14. In addition, the vehicle status identifier 31 identifies whether reprogramming is required, for example, depending on whether the update information of the program of the control microcomputer 23 has been input from the external communication unit 16.

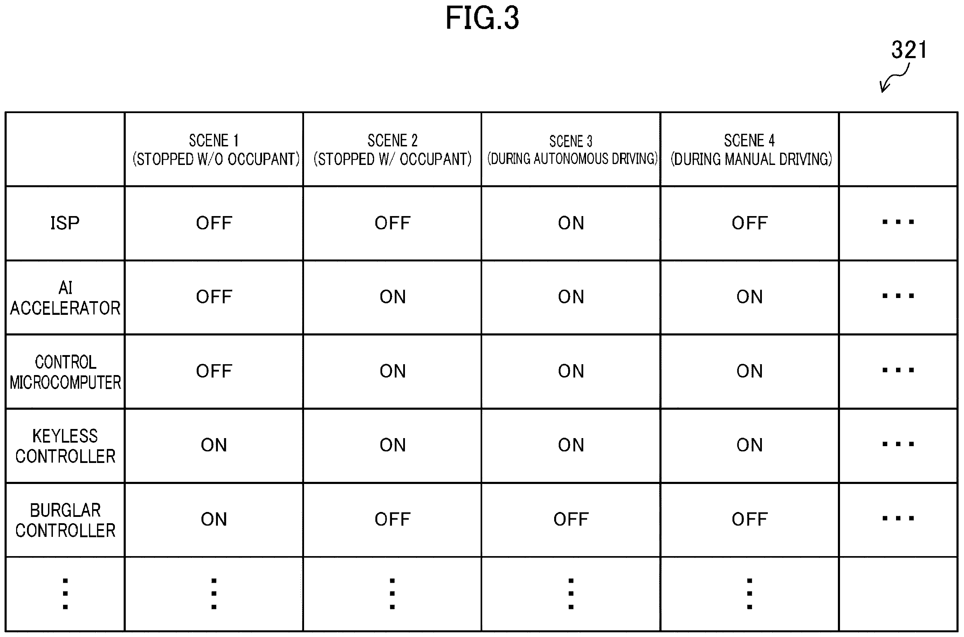

The power source controller 32 controls the supply and cutoff of the power to the functional sections 21 to 25 based on the power supply table 321. As illustrated in FIG. 3, the power supply table 321 is a table specifying, for each status of the vehicle (for each scene of the vehicle), combinations of the functional sections 21 to 25 to which power is to be supplied. In the power supply table 321 shown in FIG. 3, "ON" in the table indicates that power is supplied, and "OFF" indicates that power is not supplied.

For example, as shown in FIG. 3, the power supply table 321 defines that power is supplied to the burglar controller 24 and the keyless controller 25 but not to the ISP 21, the AI accelerator 22, and the control microcomputer 23 when the vehicle is stopped and there is no occupant in the cabin of the vehicle (scene 1 in FIG. 3). This is because when the vehicle is stopped and there is no occupant, functions for autonomous driving are not necessary, but the door lock and monitoring of intrusion into the cabin of the vehicle are necessary.

Further, as shown in FIG. 3, the power supply table 321 defines that power is supplied to the AI accelerator 22, the control microcomputer 23, and the keyless controller 25 but not to the ISP 21 and the burglar controller 24 when the vehicle is stopped and there is an occupant in the cabin of the vehicle (scene 2 in FIG. 3). This is because when the vehicle is stopped and there is an occupant, the image processing of the cameras 10 is not necessary and there is no risk of theft, but control such as air conditioning is necessary to prepare the environment in the cabin of the vehicle.

Further, as shown in FIG. 3, the power supply table 321 defines that power is supplied to the ISP 21, the AI accelerator 22, the control microcomputer 23, and the keyless controller 25 but not to the burglar controller 24 when the vehicle is autonomously traveling (scene 3 in FIG. 3). This is because it is necessary to actuate functions for autonomous driving and to keep the door from being wrongfully unlocked during autonomous driving of the vehicle.

Further, as shown in FIG. 3, the power supply table 321 defines that power is supplied to the AI accelerator 22, the control microcomputer 23, the keyless controller 25 but not to the ISP 21 and the burglar controller 24 when the vehicle is traveling by manual driving (scene 4 in FIG. 3). This is because image processing of the cameras 10 is not necessary, but control such as air conditioning is necessary to prepare the environment in the cabin of the vehicle during traveling by manual driving.

Note that the scenes 1 to 4 shown in FIG. 3 are examples of roughly divided types of the status of the vehicle for simplicity of description. Specifically, in the power supply table 321, the types of the status of the vehicle are divided in more detail based on where the vehicle is traveling, whether the engine is turned on or off, or the like. Further, the details of the power supply table 321 shown in FIG. 3 may be changed in accordance with the types or the like of the vehicle. For example, in a high-grade vehicle, power may be supplied to the burglar controller 24 as well when there is an occupant in the cabin of the vehicle or while the vehicle is traveling.

In the first embodiment, power transmitters 41 to 45 are disposed in a power transmission path between the battery B as a power source and the respective functional sections 21 to 25. In the following description, for convenience, the power transmitter between the battery B and the ISP 21 is referred to as a first power transmitter 41; the power transmitter between the battery B and the AI accelerator 22 is referred to as a second power transmitter 42; the power transmitter between the battery B and the control microcomputer 23 is referred to as a third power transmitter 43; the power transmitter between the battery B and the burglar controller 24 is referred to as a fourth power transmitter 44; and the power transmitter between the battery B and the keyless controller 25 is referred to as a fifth power transmitter 45.

The first to fifth power transmitters 41 to 45 are connected to the battery B mounted in the vehicle. The first to fifth power transmitters 41 to 45 each include a switch circuit that connects (turns on) and cuts off (turns off) the power transmission path between the battery B and the respective functional sections 21 to 25, and a DCDC converter that adjusts a voltage of the battery B. The first to fifth power transmitters 41 to 45 turn on the switch circuit upon receipt, from the integrated controller 30 (particularly the power source controller 32), of a control signal (hereinafter referred to as an ON signal) that turns on the switch circuit. That is, in the first embodiment, when the control signal (ON signal) is input from the integrated controller 30 to the power transmitters 41 to 45, power is supplied to the functional sections 21 to 25 corresponding to the power transmitters 41 to 45 which have received the control signal (for example, to the ISP 21 corresponding to the first power transmitter 41).

The power source controller 32 of the integrated controller 30 checks the power supply table 321 for the status of the vehicle identified by the vehicle status identifier 31, and outputs the ON signal to the power transmitters 41 to 45 corresponding to the combination of the functional sections 21 to 25 specified in the power supply table 321.

For example, when the vehicle status identifier 31 identifies that the vehicle is stopped and that there is an occupant in the vehicle (scene 2 in FIG. 3), the power source controller 32 outputs the ON signal to the second, third, and fifth power transmitters 42, 43, and 45 but does not output the ON signal to the first and fourth power transmitters 41 and 44 in accordance with the power supply table 321. As a result, power is supplied to the AI accelerator 22, the control microcomputer 23, and the keyless controller 25, while power is not supplied to the ISP 21 and the burglar controller 24.

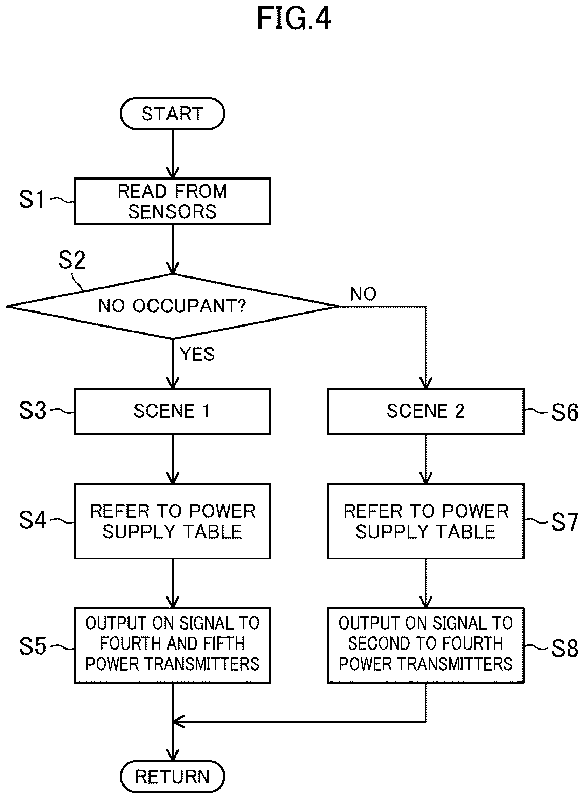

Next, processing operations of the power source control by the integrated controller 30 will be described with reference to the flowchart in FIG. 4. The flowchart illustrated herein is directed to the processing operations on the premise that the vehicle is stopped (directed to the scenes 1 and 2 shown in FIG. 3) for brief explanation of an example. In the practical flowchart, types of the status of the vehicle are divided in more detail based on, for example, whether the engine is turned on or off.

First, in step S1, the integrated controller 30 reads information from the sensors 10 to 18.

In step S2, the integrated controller 30 determines whether there is an occupant in the cabin of the vehicle. In this step S2, for example, the integrated controller 30 determines the presence or absence of the occupant based on the detection result of the occupant status sensor 14. In step S2, if YES, where there is no occupant in the vehicle, the processing proceeds to step S3, whereas if NO, where there is an occupant in the vehicle, the processing proceeds to step S6.

In step S3, the integrated controller 30 identifies that the status of the vehicle is the scene 1.

In the next step S4, the integrated controller 30 refers to the power supply table 321 to identify the power transmitter to which the ON signal is to be sent when the vehicle status is the scene 1.

In the next step S5, the integrated controller 30 outputs the ON signal to the fourth and fifth power transmitters 44 and 45. After step S5, the processing returns.

Meanwhile, in step S6, the integrated controller 30 identifies that the status of the vehicle is the scene 2.

In the next step S7, the integrated controller 30 refers to the power supply table 321 to identify the power transmitter to which the ON signal is to be sent when the vehicle status is the scene 2.

In the next step S8, the integrated controller 30 outputs the ON signal to the second, third, and fifth power transmitters 42, 43, and 45. After step S8, the processing returns.

Thus, the power source control device 1 of the first embodiment includes: a plurality of sensors 10 to 18 that acquire information including an external environment of a vehicle; and an arithmetic unit 100 that controls onboard devices of a vehicle in response to the information input from the plurality of sensors 10 to 18, wherein the arithmetic unit 100 includes: a vehicle status identifier 31 that identifies a status of the vehicle based on the information input from each of the sensors 10 to 18; a plurality of functional sections 21 to 25 that are actuated in accordance with the status of the vehicle and generate a control signal to be transmitted to the onboard device; and a power source controller 32 that controls supply and cutoff of power to the functional sections 21 to 25 so that the power is supplied to a predetermined combination of the functional sections 21 to 25 in accordance with the status of the vehicle identified by the vehicle status identifier 31. In this configuration, the arithmetic unit 100 includes the plurality of functional sections 21 to 25 to set a control amount of the onboard device of the vehicle, and thus the number of microcomputers controlling the onboard device can be reduced. This can simplify a configuration of the electrical system of the vehicle. Further, the power source controller 32 can supply power only to the functional sections 21 to 25 related to the functions to be exhibited by the vehicle, while cutting off the power supply to the other functional sections 21 to 25. Consequently, an average value of power consumption in total operating time of the vehicle can be lowered, and an increase in the power consumption can be reduced.

In particular, in the first embodiment, the ISP 21, the AI accelerator 22, and the control microcomputer 23 are capable of executing a function of autonomous driving which sets a traveling route to be traveled by the vehicle and sets a motion of the vehicle for following the traveling route. In the autonomous driving function, it is necessary to calculate the traveling route of the vehicle and set the motion of the vehicle for following the traveling route, and the functional sections 21 to 23 are required to perform high-speed processing. Thus, the power consumption of the functional sections 21 to 23 for achieving the autonomous driving function tends to be larger than the power consumption of the burglar controller 24 or the keyless controller 25. Thus, when it is not necessary to exert the autonomous driving function, such as while the vehicle is stopped, power supply to some or all of the functional sections 21 to 23 for achieving the autonomous driving function is cut off to reduce an increase in the power consumption. In this manner, reduction in the power consumption is achieved more appropriately.

Further, in the first embodiment, the arithmetic unit 100 further includes first to fifth power transmitters 41 to 45 disposed in power transmission paths between the battery B and the respective functional sections 21 to 25, wherein when the ON signal is input from the power source controller 32 to the power transmitters 41 to 45, power is supplied to the functional sections 21 to 25 corresponding to the power transmitters 41 to 45 which have received the ON signal. It is therefore enough for the power source controller 32 to output the ON signal to the power transmitters 41 to 45 in accordance with the status of the vehicle identified by the vehicle status identifier 31. This can reduce a processing load on the power source controller 32.

Further, since the functional sections 21 to 23 for achieving the autonomous driving function are required to perform high-speed processing, a dark current tends to be larger in the functional sections 21 to 23 than a dark current in the keyless controller 25 and the burglar controller 24. Therefore, the provision of the first to third power transmitters 41 to 43 between the battery B and the respective functional sections 21 to 23 that achieve the autonomous driving function makes it possible to cut off the power supply to the functional sections 21 to 23 and hence to reduce the power consumption by the dark current.

Further, in the first embodiment, the arithmetic unit 100 further includes a storage 33 that stores a power supply table 321 specifying, for each status of the vehicle, combinations of the functional sections 21 to 25 to which power is to be supplied, and the power source controller 32 controls the supply and cutoff of the power to the functional sections 21 to 25 based on the power supply table 321. It is therefore enough for the power source controller 32 to check the power supply table 321 for the status of the vehicle identified by the vehicle status identifier 31 to control the supply and cutoff of the power to the functional sections 21 to 25. This can further reduce a processing load on the power source controller 32.

### (Second Embodiment)

Hereinafter, a second embodiment will be described in detail with reference to the drawings. In the following description, components that are common with those described in the first embodiment will be denoted by the same reference numerals, and will not be described in detail.

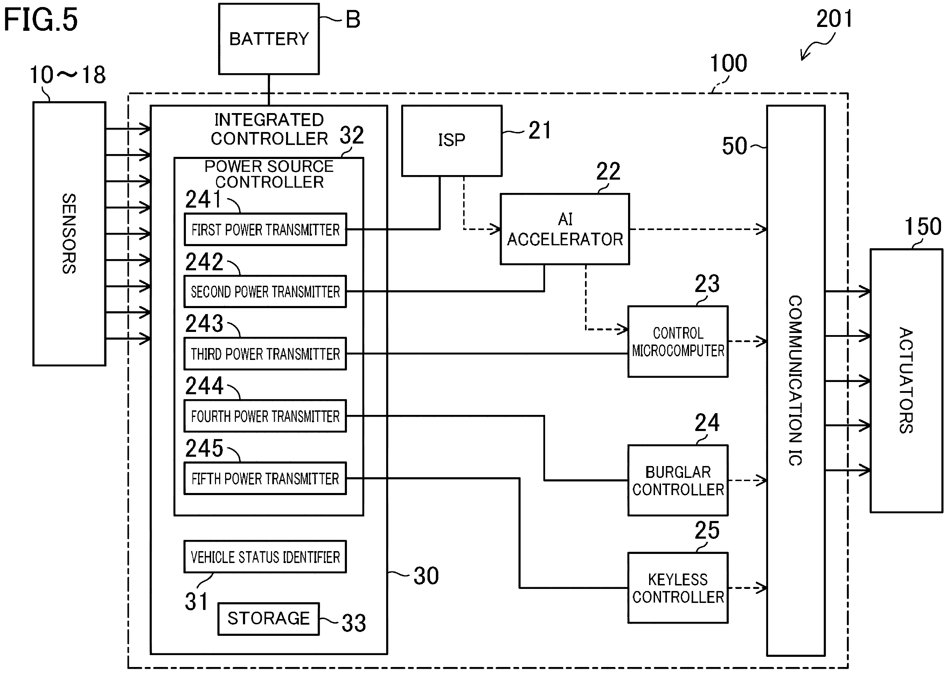

In a power source control device 201 according to the second embodiment, the arithmetic unit 100 has a different configuration from the arithmetic unit 100 of the first embodiment. Specifically, in the second embodiment, as shown in FIG. 5, the first to fifth power transmitters 41 to 45 are not provided in the power transmission path between the battery B and the respective functional sections 21 to 25. In the second embodiment, unlike the first embodiment, the integrated controller 30 supplies power directly to the functional sections 21 to 25.

In the second embodiment, as shown in FIG. 5, the power source controller 32 of the integrated controller 30 includes first to fifth power transmitters 241 to 245 including a switch circuit that controls power supply (turning on) and power cut off (turning off) and a DCDC converter that adjusts the voltage of the battery B. The first to fifth power transmitters 241 to 245 correspond to the respective functional sections 21 to 25. The power source controller 32 controls the supply and cutoff of the power to the functional sections 21 to 25 based on the power supply table 321. That is, the power source controller 32 checks the power supply table 321 for the status of the vehicle identified by the vehicle status identifier 31, and turns on the switch circuit of the power transmitters 241 to 245 corresponding to the combination of the functional sections 21 to 25 specified in the power supply table 321.

Similarly to the first embodiment, in the second embodiment as well, the power source controller 32 can supply power only to the functional sections 21 to 25 related to the functions to be exhibited by the vehicle, while cutting off the power supply to the other functional sections 21 to 25. Consequently, an average value of power consumption in total operating time of the vehicle can be lowered, and an increase in the power consumption can be reduced.

### (Other Embodiments)

The present disclosure is not limited to the embodiments described above, and may be modified within the scope of the claims.

For example, in the first and second embodiments, the vehicle status identifier 31, the power source controller 32, and the storage 33 are collectively stored in the integrated controller 30. However, the configuration is not limited to thereto, and each of these elements may be independently configured (for example, as independent semiconductor chips).

Further, in the first and second embodiments, the fifth power transmitter 45 is provided between the integrated controller 30 and the keyless controller 25. However, power may be constantly supplied to such a functional section as the keyless controller 25 to which power is frequently supplied, without a power transmitter.

Further, the automobile is capable of autonomous driving in the first and second embodiments, but the automobile does not have to have autonomous driving functions.

Further, in the first and second embodiments, a vehicle of an automobile is illustrated as the mobile body. However, the configuration is not limited thereto, and the mobile body may be a transport robot that transports a product in a factory, a warehouse, or the like.

The embodiments described above are merely examples in nature, and the scope of the present disclosure should not be interpreted in a limited manner. The scope of the present disclosure is defined by the appended claims, and all variations and modifications belonging to a range equivalent to the range of the claims are within the scope of the present disclosure.

### INDUSTRIAL APPLICABILITY

The technique disclosed herein is useful in reducing an increase in power consumption in a power source control device for a mobile body.

### DESCRIPTION OF REFERENCE CHARACTERS

- 1, 201: Power Source Control Device
- 10: Camera (Sensor)
- 11: Radar (Sensor)
- 12: Position Sensor (Sensor)
- 13: Vehicle Speed Sensor (Sensor)
- 14: Occupant Status Sensor (Sensor)
- 15: Parking Lock Sensor (Sensor)
- 16: External Communication Unit (Sensor)
- 17: Keyless Sensor (Sensor)
- 18: Burglar Sensor (Sensor)
- 21: ISP (Functional Section)
- 22: AI Accelerator (Functional Section)
- 23: Control Microcomputer (Functional Section)
- 24: Burglar Controller (Functional Section)
- 25: Keyless Controller (Functional Section)
- 30: Integrated Controller
- 31: Vehicle Status Identifier (Mobile Body Status Identifier)
- 32: Power Source Controller
- 33: Storage
- 41, 241: First Power Transmitter
- 42, 242: Second Power Transmitter
- 43, 243: Third Power Transmitter
- 44, 244: Fourth Power Transmitter
- 45, 245: Fifth Power Transmitter
- 100: Arithmetic Unit
- 321: Power Supply Table
- B: Battery (Power Source)

## Claims

1. A power source control device for a mobile body, the power source control device comprising:
a plurality of sensors that acquire information including an external environment of the mobile body; and
an arithmetic unit that controls an onboard device of the mobile body in response to the information input from the plurality of sensors, wherein
the arithmetic unit includes:
a mobile body status identifier that identifies a status of the mobile body based on the information input from each of the sensors;
a plurality of functional sections that are actuated in accordance with the status of the mobile body and generate a control signal to be transmitted to the onboard device; and
a power source controller that controls supply and cutoff of power to the functional sections so that the power is supplied to a predetermined combination of the functional sections in accordance with the status of the mobile body identified by the mobile body status identifier.

2. The power source control device of claim 1, wherein
the arithmetic unit further includes power transmitters disposed in power transmission paths between a power source and the respective functional sections, and
when a control signal is input from the power source controller to the power transmitters, power is supplied to the functional sections corresponding to the power transmitters which have received the control signal.

3. The power source control device of claim 1 or 2, wherein
the arithmetic unit further includes a storage that stores a power supply table specifying, for each status of the mobile body, combinations of the functional sections to which the power is to be supplied, and
the power source controller controls the supply and cutoff of the power to the functional sections based on the power supply table.

4. The power source control device of any one of claims 1 to 3, wherein
the plurality of functional sections are capable of executing a function of autonomous traveling which sets a traveling route to be traveled by the mobile body and sets a motion of the mobile body for following the traveling route.

5. The power source control device of claim 4, wherein
the mobile body is an automobile, and
the power source controller cuts off the supply of the power to the plurality of functional sections for achieving the function of the autonomous traveling when the status of the mobile body identified by the mobile body status identifier is that the automobile is stopped and there is no occupant in a cabin of the automobile.

6. The power source control device of claim 4 or 5, wherein
in addition to the autonomous traveling, the mobile body is capable of manual traveling in which a vehicle is driven by an operation by an occupant,
among the plurality of functional sections, the functional section for executing the function of the autonomous traveling includes an image processor that performs image processing on an output of a camera that captures an image of an external environment of the vehicle, and
the power source controller cuts off the supply of the power to the image processor when the status of the mobile body identified by the mobile body status identifier is that the mobile body is in a status of the manual traveling.

7. The power source control device of any one of claims 1 to 6,
the mobile body is an automobile, and
the plurality of functional sections are capable of executing an anti-theft function of the mobile body, and
the power source controller cuts off the supply of the power to the plurality of functional sections for achieving the anti-theft function when the status of the mobile body identified by the mobile body status identifier is that the automobile is traveling or that there is an occupant in a cabin of the automobile.
